# EUROPEAN PATENT APPLICATION

(11) **EP 4 501 620 A1**
(43) Date of publication of application: **05.02.2025**
(21) Application number: 23197908.9
(22) Date of filing: 18.09.2023
(51) Int. Cl.: B32B 7/12, B32B 15/08, B32B 15/095, B32B 27/08, G09F 3/02

(54) **FILM FOR PREVENTING COLOR MIGRATION OF FABRICS**

(30) Priority: 31.07.2023 TW 112128714
(71) Applicant: Chimera Multinational Co., Ltd, Taipei City (TW)
(72) Inventor: YAO, MING-HSIEN, Taipai City (TW)
(74) Representative: Lermer, Christoph

(57) **Abstract**

The invention provides a film for preventing color migration of fabrics, which is used for attaching on fabrics, comprising a surface layer and a barrier layer composition, the surface layer is a film of polyurethane, thermoplastic polyurethane elastomer, or thermoplastic polyester elastomer; the barrier layer composition has a barrier layer capable of blocking dyes, and the barrier layer composition is combined with the surface layer. When the film is attached to a fabric, the barrier layer is located between the fabric and the surface layer to block colors of the fabric from migrating into the surface layer.

## Description

### FIELD OF THE INVENTION

The invention relates to a film, and more particularly to a film used for attaching on a fabric to prevent the film from being stained by the fabric.

### DESCRIPTION OF THE RELATED ART

Setting patterns or characters on clothing or textiles made of fabric can make the clothing or textiles aesthetically pleasing. One method of setting patterns or characters on the surface of the fabric is to stick a plastic film on the fabric.

The fibers of fabrics are dyed to make fabrics of various colors. After the plastic film has been stuck on the fabric over a period of time, the color dyes of the fabric will infiltrate into the film on the fabric. The film will be mixed with the colors of the fabric, making the appearance of the film rendered and mixed with colors, the film no longer has the original color, and will become aesthetically displeasing. The longer the time, the more serious the colors of the fabric will be mixed into the film. Films on clothing or textiles are discarded when they appear turbid and impure in color.

### SUMMARY OF THE INVENTION

The invention aims to solve the drawbacks disclosed above, and its object is to provide a film for preventing color migration of fabrics capable of preventing dyes of fabrics from migrating and infiltrating into the film.

Another object of the invention is to provide a film capable of preventing color migration and making the film a light-reflective film, a luminescent film or a glossy film.

Yet another object of the invention is to provide a film for preventing color migration of fabrics capable of being cut into patterns and attached to fabrics.

A film for preventing color migration of fabrics provided by the invention is used for attaching to fabrics, comprising:
a surface layer being a material of polyurethane (PU), thermoplastic polyurethane elastomer (TPU), or thermoplastic polyester elastomer (TPEE), the surface layer has a first surface and a second surface located on opposite sides;
   and
a barrier layer composition having a barrier layer capable of blocking dyes, the barrier layer composition is combined with the second surface of the surface layer; when the film is attached to a fabric, the barrier layer is located between the fabric and the surface layer.

Thereby, the barrier layer is capable of blocking dye molecules of the fabric, so that the dye molecules will not migrate into the surface layer, and colors of the surface layer will not be damaged.

The barrier layer composition has a carrier layer, a first protective layer and the barrier layer;
the carrier layer is a film with a rigidity greater than a rigidity of the first protective layer, and with a stretching rate smaller than a stretching rate of the first protective layer;
the first protective layer is disposed on a release surface of the carrier layer, and is a non-adhesive film or a film with adhesiveness when being heated;
   and
the barrier layer is disposed on the first protective layer; the surface layer is combined with a side of the barrier layer composition where the carrier layer is not disposed.

Preferably, the second surface of the surface layer is combined with the barrier layer.

Preferably, the barrier layer composition further comprises a second protective layer disposed on the barrier layer. The second protective layer is a film formed by coating on the barrier layer. Preferably, the second protective layer is a polymer film.

Before the film is attached to a fabric, the carrier layer is peeled off from the film.

Preferably, the barrier layer is made of a metal material such as gold, silver, copper or aluminum or their oxides, or an inorganic substance such as zinc sulfide, niobium pentoxide, silicon dioxide or titanium dioxide, and is plated on the first protective layer by sputtering or evaporation.

Preferably, the carrier layer is a PET (polyethylene terephthalate) film or a PE (polyethylene) film; the first protective layer is formed by coating the carrier layer with a resin, which is a film of polyurethane (PU) or thermoplastic polyurethane elastomer (TPU).

Preferably, the first surface of the surface layer is a mirror surface, a matte surface or has textures.

Preferably, the surface layer is added with luminescent materials, light-reflective glass microbeads or pearl powder, so that the film becomes a luminescent film, a light-reflective film or a film with a luster of pearl powder.

Preferably, the film further comprises a light-reflective layer disposed on the first surface of the surface layer, one surface of the light-reflective layer is a light-reflective surface exposed on the film.

Preferably, the first protective layer is a non-adhesive film; an adhesive layer is disposed on the first protective layer, and the film is attached to the fabric through the adhesive layer.

Preferably, the first protective layer is capable of producing an adhesiveness when being heated, and the film is attached to a fabric with the adhesiveness of the first protective layer when being heated.

Preferably, a thickness of the barrier layer composition is not greater than 20 microns; a thickness of the first protective layer, the barrier layer and the second protective layer is not greater than 3 microns.

The film can be cut into patterns and attached with a fabric.

### BRIEF DESCRIPTION OF DRAWINGS

The objects, features, and achieved efficacies of the invention can be understood from the description and drawings of the following preferred embodiments, in which:
FIG. 1 is a perspective view of a film for preventing color migration of fabrics according to a preferred embodiment of the invention.
FIG. 2 is a cross-sectional view of section line 2-2 in FIG. 1.
FIG. 3 is a cross-sectional view of a barrier layer composition according to a preferred embodiment of the invention.
FIG. 4 is a cross-sectional view of a forming structure of a surface layer according to a preferred embodiment of the invention.
FIG. 5 is a cross-sectional view of peeling off a carrier layer and a release layer from the film of FIG. 2.
FIG. 6 is a cross-sectional view of the film of FIG. 5 attached on a fabric.
FIG. 7 is a cross-sectional view of the film for preventing color migration of fabrics according to a second preferred embodiment of the invention, and showing that the carrier layer and the release layer have been peeled off from the film and the film is attached to the fabric.
FIG. 8 is a schematic cross-sectional view of the film according to a third preferred embodiment of the invention.
FIG. 9 is a cross-sectional view of the carrier layer and the release layer have been peeled off from the film of FIG. 8 and the film is attached to the fabric.
FIG. 10 shows a pattern cut from the film of the present invention.

### DETAILED DESCRIPTION OF THE INVENTION

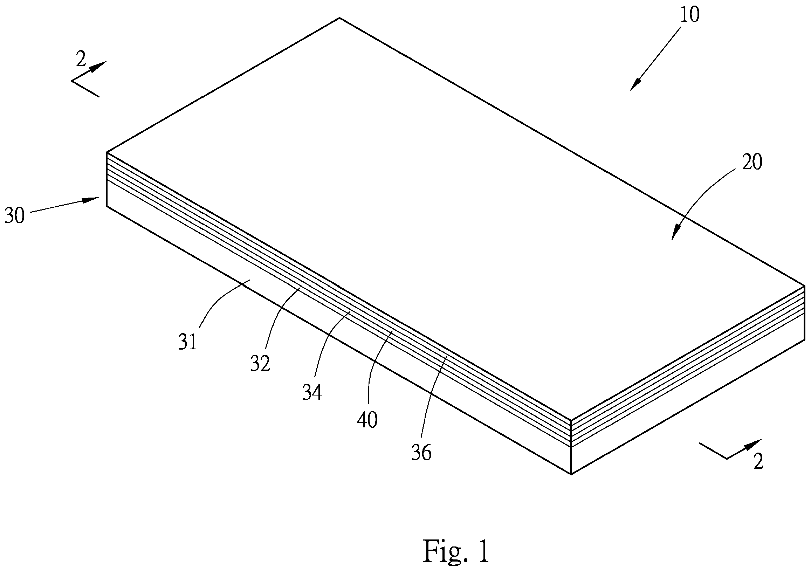

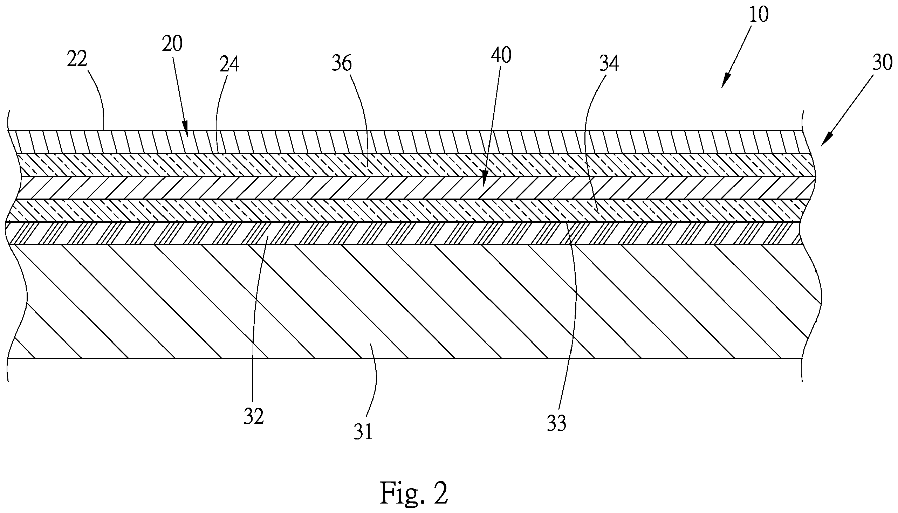

Please refer to FIG. 1 and FIG. 2 for a film 10 for preventing color migration of fabrics provided by a first preferred embodiment of the invention and being a layered structure, comprising a surface layer 20 and a barrier layer composition 30 combined with the surface layer 20. The barrier layer composition 30 comprises a carrier layer 31, a release layer 32, a first protective layer 34, a barrier layer 40 and a second protective layer 36. A thickness of the film 10 is relatively thin, and the drawings in this specification are only examples of each of the layers.

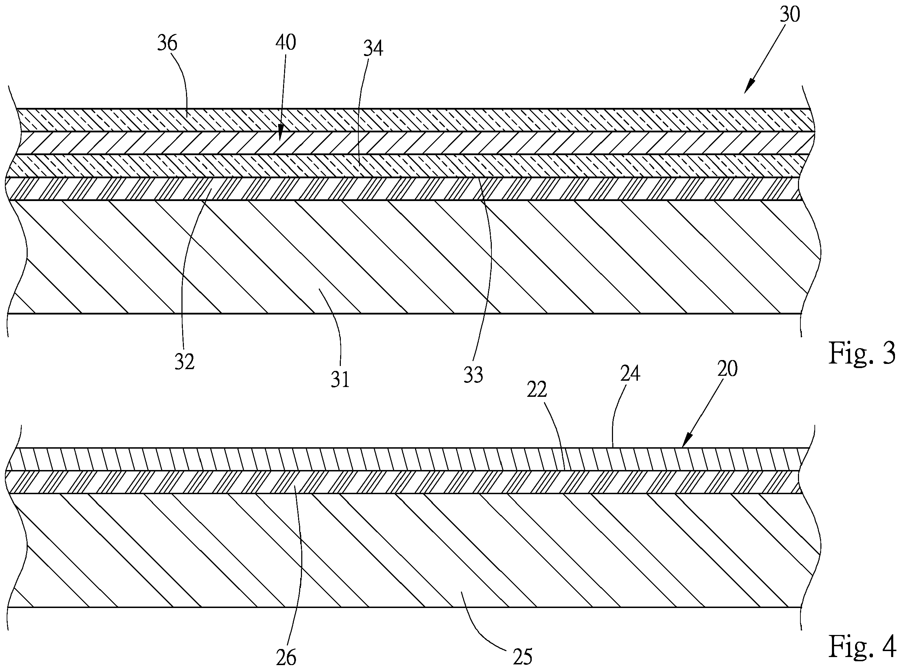

In this preferred embodiment, the surface layer 20 and the barrier layer composition 30 are fabricated separately and then combined with each other. Please refer to FIG. 3, a manufacturing method of the barrier layer composition 30 is as follows. Firstly, a carrier layer 31 is prepared, preferably made of PET (polyethylene terephthalate) or PE (polyethylene). Then, a liquid resin is coated on a release surface 33 of the carrier layer 31 to form a first protective layer 34. A scraper of a coating equipment is capable of precisely controlling and forming thickness and flatness of the first protective layer 34. Preferably, the first protective layer 34 is made of polyurethane (PU) or thermoplastic polyurethane elastomer (TPU). After the first protective layer 34 is formed and shaped, a metallic barrier layer 40 is plated on one surface of the first protective layer 34 with sputtering or evaporation equipment. Preferably, the barrier layer 40 is selected from gold, silver, copper or aluminum. Afterwards, a second protective layer 36 is disposed on the barrier layer 40 to protect the barrier layer 40. The barrier layer 40 is located between the two protective layers 34, 36 and is protected by the two protective layers 34, 36 to prevent two surfaces of the barrier layer 40 from being damaged. The carrier layer 31 is located on one side of the barrier layer composition 30, and the barrier layer 40 and the second protective layer 36 are located on another side of the barrier layer composition 30, away from the carrier layer 31.

Please refer to FIG. 4, the surface layer 20 is formed by coating a liquid resin on a release surface 26 of a release layer 25, the release layer 25 can be a release paper or a release film, the release surface 26 can be formed by coating a release agent on the layer 25, the release surface 26 can also be formed by material properties of the release layer 25, that is, a material of the release layer 25 itself has release properties to form the release surface 26 without coating a release agent. After the surface layer 20 is shaped, the surface layer 20 can be made, and the surface layer 20 is removed from the release layer 25.

Combining the surface layer 20 with the second protective layer 36 of the barrier layer composition 30 to form the film 10. Alternatively, the barrier layer composition 30 does not comprise the second protective layer 36, the surface layer 20 is directly attached on the barrier layer 40 to form the film 10. When attaching the film 10 to a fabric, the carrier layer 31 and the release layer 32 are peeled off to expose the first protective layer 34, and then the film 10 from which the carrier layer 31 and the release layer 32 have been removed is attached to the fabric, the film 10 is attached to the fabric with a side where the first protective layer 34 is located, and the surface layer 20 is exposed on the fabric. The film 10 is cut into patterns and then attached on the fabric to make the fabric have patterns. Through barrier of the barrier layer 40, dye molecules in the fabric are incapable of passing through the barrier layer 40, so that the surface layer 20 will not be stained by dyes of the fabric.

In one manufacturing method, the first protective layer 34 can be an adhesive material, such as hot melt adhesive, so that the film 10 is attached to the fabric with hot melt adhesive.

In one manufacturing method, the first protective layer 34 is non-adhesive, an adhesive layer is disposed on the protective layer 34, and the film 10 is attached to the fabric by the adhesive layer.

Luminescent materials, light-reflective glass microbeads or pearl powder can be added to a resin forming the surface layer 20, so that the film 10 becomes a luminescent film, a light-reflective film or a film with pearl luster capable of blocking dyes of the fabric

One surface of the surface layer 20 can be made into a mirror surface, a matte surface or to have textures, so that an outer surface of the film 10 has a mirror surface or a matte surface effect and/or has various textures.

Another manufacturing method of the film 10 is to dispose a light-reflective layer on the surface layer 20, and the light-reflective layer is exposed on the film 10, so that the film 10 forms a light-reflective film. Light-reflective elements of the light-reflective layer can be light-reflective glass microbeads or light-reflective prisms.

Please refer to FIG. 3, In this preferred embodiment, the carrier layer 31 of the film 10 can be a two-way stretched PET with extremely low stretchability, superior flatness and uniform thickness, and low stretching rate and deformation when exerted with a force. The release layer 32 is disposed on a surface of the carrier layer 31, and is a layer formed by coating the carrier layer 31 with a release agent, so that a surface of the carrier layer 31 forms the release surface 33. In practice, a release agent can be added to the carrier layer 31 of PET material so that a surface of the carrier layer 31 directly form a release surface without coating a release layer thereon. Alternatively, the carrier layer 31 can be made of a material with release properties, such as high-density polyethylene. Polyethylene has a release effect, so that one surface of the carrier layer forms a release surface. Polyethylene has high rigidity, low ductility, and can be made into a film with good flatness.

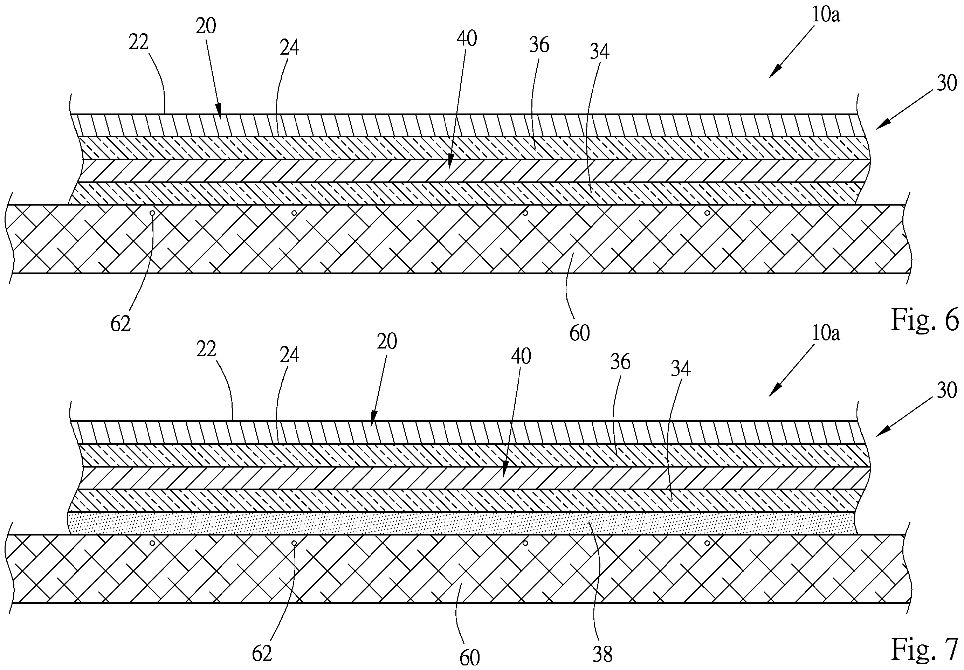

The first protective layer 34 is formed by coating the release surface 33 of the carrier layer 31 with a liquid resin. The first protective layer 34 can be selected from a resin capable of producing adhesiveness or a non-adhesive resin. The first protective layer 34 in an embodiment shown in FIG. 6 can be made of polyurethane (PU) without adhesiveness. The first protective layer 34 in an embodiment shown in FIG. 2 is made of hot melt adhesive of thermoplastic polyurethane elastomer (TPU) capable of producing adhesiveness when being heated.

The barrier layer 40 is plated on one surface of the first protective layer 34, and the barrier layer 40 has no pores inside to be capable of producing an effect of blocking penetration of substances. In this preferred embodiment, the barrier layer 40 is a metal medium in a layered form, which can be plated on the surface layer 20 with a metal material (such as silver, aluminum, gold, copper) or its oxides by vacuum evaporation in physical vapor deposition (PVD), or can be plated on the first protective layer 34 with an inorganic substance such as zinc sulfide, niobium pentoxide, silicon dioxide, titanium dioxide by magnetron sputtering ion plating, or can be plated on the first protective layer 34 with a metal material such as silver ion, aluminum ion, gold ion or copper ion by vacuum sputtering or ion plating. A specific method of making the barrier layer 40 is that a two-way stretched PET film is provided, a release agent is coated on the PET film, a PU film (the first protective layer 34) is coated on the release surface 33 of the PET film, and then the barrier layer 40 is plated on the PU film. The barrier layer 40 of this embodiment uses aluminum. The second protective layer 36 is disposed on one surface of the barrier layer 40. In this embodiment, the second protective layer 36 is a film formed by coating a PU resin on the barrier layer 40 to provide protection for the barrier layer 40.

The inventor has found through experiments that if the barrier layer 40 is not formed through the carrier layer 31, when metals such as gold, silver, copper, aluminum or the aforementioned inorganic substances such as zinc sulfide, niobium pentoxide, silicon dioxide, and titanium dioxide are directly plated on a PU film, because the PU film has a certain stretching rate, it is easy to have deformation and stress, thus the PU film is prone to be wavy or wrinkled and is prone to have unevenness, resulting in stress and deformation on the metal barrier layer 40 plated on the PU film, which causes gaps, breaks, and breaches being formed on the barrier layer 40, and therefore the barrier layer 40 is incapable of blocking dye molecules of the fabric, so it is not feasible to directly coat the metal barrier layer 40 on a PU film. In this preferred embodiment, since the PET film or PE film with low stretching rate and uniform thickness is used as a carrier for forming and plating the metal barrier layer 40, the barrier layer 40 can be plated and formed on the carrier, a thickness of the barrier layer 40 is uniform without stress and deformation, and without gaps or cracks, and therefore the barrier layer 40 is capable of blocking dye molecules of the fabric from passing through. The invention uses the PET film or PE film as a carrier and coats PU (the first protective layer 34) on the carrier, and then the barrier layer 40 is plated. The barrier layer 40 is stabilized by the PET film or PE film with strong rigidity and non-stretchability (low stretchability and deformation) characteristics in order to plate the dense barrier layer 40 without stress, deformation and cracks, thereby achieving an object of preventing dye molecules of the fabric from migrating into the surface layer 20. Thicknesses of the first and second protective layers 34, 36 are quite thin, a rigidity of the carrier layer 31 is greater than that of the first protective layer 34, and extensibility and stretchability of the carrier layer 31 are much lower than that of the first protective layer 34, so that the first protective layer 34 will not stretch or extend, can stay flat, and is wrinkle-free, and the barrier layer 40 is formed without stress, deformation or cracks.

The thinner a thickness of the first protective layer 34, the less deformation of the barrier layer 40 will be caused. In this preferred embodiment, a thickness formed by the first protective layer 34, the barrier layer 40 and the second protective layer 36 is not greater than 3 microns (µm), between 0.3 and 3 microns, preferably, not greater than 2 microns, more preferably, not greater than 1 micron. The barrier layer composition 30 has a thickness not greater than 20 microns (µm), preferably, not greater than 16 microns, more preferably, not greater than 14 microns.

The surface layer 20, as shown in FIG. 4, is formed by coating the release layer 25 with a liquid resin, and a material of the surface layer 20 can be selected from polyurethane (PU), thermoplastic polyurethane elastomer (TPU) or thermoplastic polyester elastomer (TPEE). In this embodiment, the surface layer 20 is polyurethane. The surface layer 20 has a first surface 22 and a second surface 24 located on opposite sides. The first surface 22 faces the release layer 25 and combines with the release surface 26.

The release surface 26 of the release layer 25 can be made to form a mirror surface (or called a smooth surface, a bright surface, a glossy surface), a matte surface, or concave-convex textures to cause the first surface 22 of the surface layer 20 to become a mirror surface, a matte surface, or to have textures, the textures are a mirror image of textures on the release surface 26, so that an outer surface of the film 10 has a mirror or matte surface effect and various textures.

After the surface layer 20 is fabricated, the film 10 is formed by combining the second surface 24 with the second protective layer 36 of the barrier layer composition 30. A side where the surface layer 20 is located is an outer side of the film 10. In FIG. 2, the surface layer 20 is an outer surface of the film 10. Alternatively, the barrier layer composition 30 does not comprise the second protective layer 36 made of PU; the second surface 24 of the surface layer 20 made of PU is attached to the barrier layer 40. The barrier layer 40 is located between the first protective layer 34 and the surface layer 20.

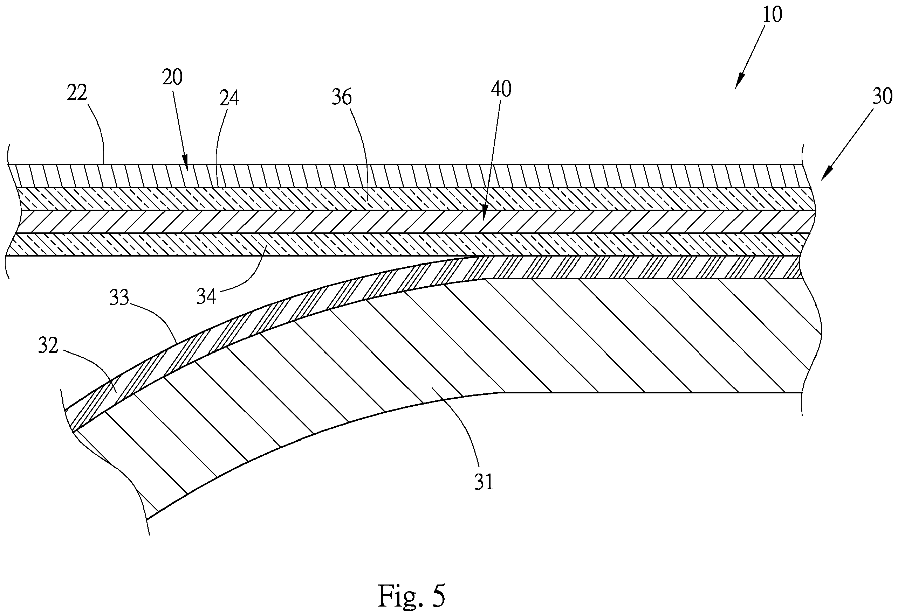

The film 10 is used to attach on a fabric. Please refer to FIG. 5, before attaching the film 10 on the fabric, the carrier layer 31 and the release layer 32 are peeled off from the film 10. After peeling, as shown in FIG. 6, the first protective layer 34 is no longer covered by the carrier layer 31 and is exposed. A film 10a only keeps the surface layer 20, the second protective layer 36, the barrier layer 40 and the first protective layer 34. The numeral 10a represents the film 10 with the carrier layer 31 and the release layer 32 peeled off, the surface layer 20 is an outer surface of the film 10a, and a surface on a side where the first protective layer 34 is located is an inner surface of the film 10a.

Then, as shown in FIG. 6, the inner surface of the film 10a is attached to a fabric 60. In the embodiment of FIG. 2, the first protective layer 34 is TPU hot melt adhesive. When attaching, as shown in FIG. 6, the first protective layer 34 is in contact with an outer surface of the fabric 60, and then heat energy is applied to the film 10a with an iron or a heating device to heat and melt the hot melt adhesive to produce adhesiveness, and the film 10a is adhered to the fabric 60.

The film of FIG. 7 has the surface layer 20 and the barrier layer composition 30 that combines with the surface layer 20. The barrier layer composition 30 comprises the carrier layer 31, the release layer 32, the first protective layer 34, the barrier layer 40 and the second protective layer 36, the first protective layer 34 is PU, and the film 10a in FIG. 7 has been stripped of the carrier layer 31 and the release layer 32. The film 10a further comprises an adhesive layer 38, such as glue or adhesive, disposed on a surface of the first protective layer 34. When attaching the film 10a, the carrier layer 31 and the release layer 32 are peeled off to expose the first protective layer 34, the adhesive layer 38 is combined with the first protective layer 34, the inner surface of the film 10a contacts the fabric 60, and then attach the film 10a to the fabric 60 with the adhesive layer 38.

After the film 10a is attached to the fabric 60, the barrier layer 40 is located between the surface layer 20 and the fabric 60. The metal barrier layer 40 of the invention has no pores, through the manufacturing method and structure disclosed in the invention, the barrier layer 40 will not have stress, and will not produce deformation, cracks or holes. After adhering the film 10a on the fabric 60, as shown in FIGS. 6 and 7, the barrier layer 40 is capable of blocking dye molecules 62 of the fabric 60, so that the dye molecules 62 are incapable of migrating into the surface layer 20. The surface layer 20 will not be mixed with colors of the fabric 60 to keep colors of the surface layer 20 pure and to prevent the surface layer 20 from being stained by the dye molecules 62 of the fabric 60.

In implementation of the invention, luminescent materials, light-reflective glass microbeads or pearl powder can be further added to the surface layer 20 to provide the surface layer 20 with luminescent or light-reflective function, or colors formed by pearl powder. In addition to be capable of blocking dyes of the fabric 60, the film 10 becomes a luminescent film, a light-reflective film or a film with a luster of pearl powder.

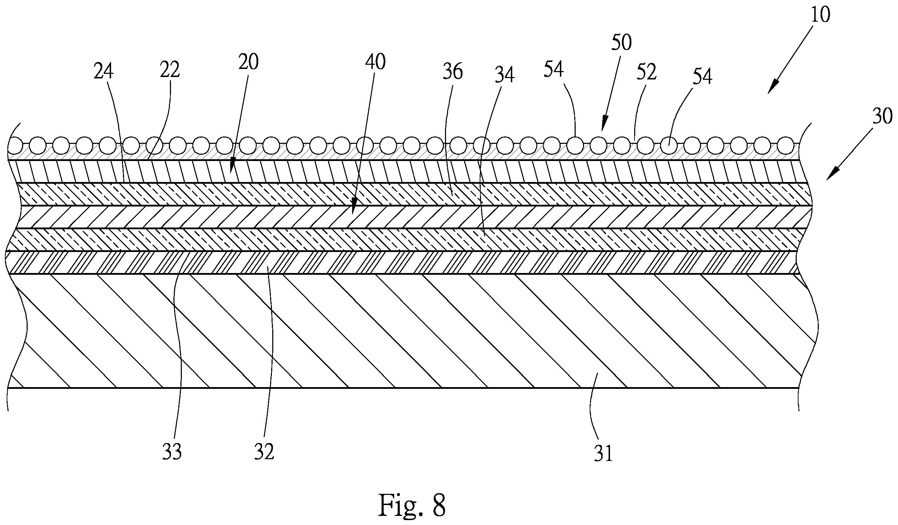

FIG. 8 shows a third preferred embodiment of the film 10 of the invention, the film 10 can be provided with the structure of FIG. 2 or the structure of FIG. 7, a difference is that the film 10 further comprises a light-reflective layer 50 adhered on the first surface 22 of the surface layer 20. The light-reflective layer 50 is a layer formed of resin, with one surface being a light-reflective surface 52 provided with a plurality of light-reflective glass microbeads 54. The light-reflective surface 52 is outwardly exposed on the film 10.

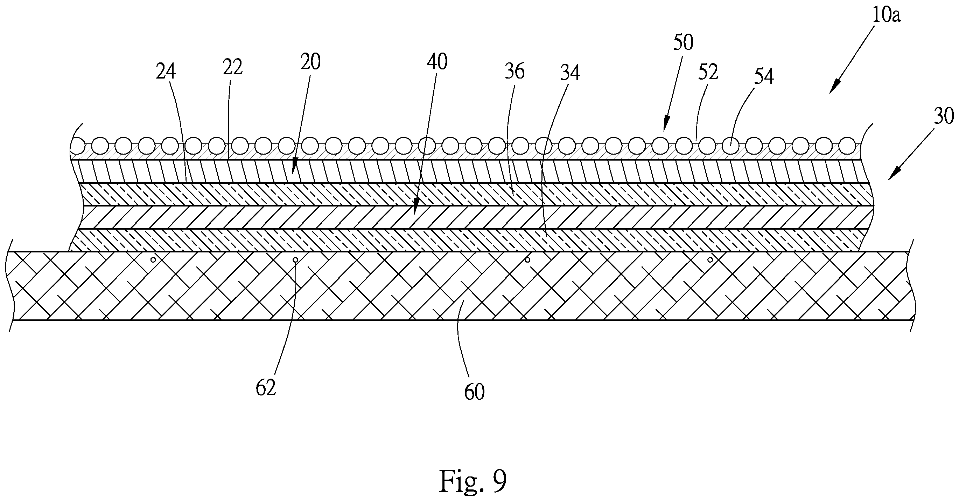

Please refer to FIG. 9, after peeling off the carrier layer 31 and the release layer 32 from the film 10, the inner surface of the film 10a is attached on a fabric 60. As shown in FIG. 5, the film 10a can be attached to the fabric 60 through the first protective layer 34 made of TPU, or as shown in FIG. 7, the film 10a can be attached to the fabric 60 through a adhesive layer 38. The light-reflective surface 52 of the light-reflective layer 50 is exposed on the fabric 60 to provide safety function. The barrier layer 40 is capable of blocking the dye molecules 62 of the fabric 60.

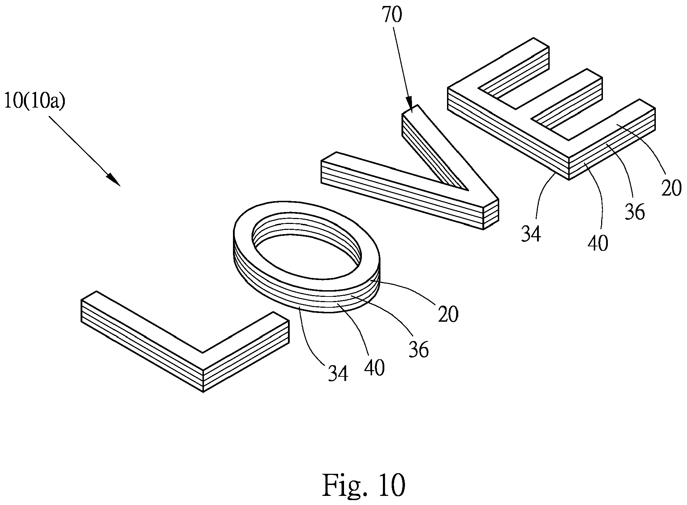

Please refer to FIG. 10, the film 10 (10a) can be cut into various patterns 70 manually or by computer equipment, including non-text patterns and/or text patterns, such as English word LOVE. In FIG. 10, a side where the surface layer 20 of the patterns 70 is located is the outer side of the film 10 (10a), and a side where the first protective layer 34 is located is the inner side of the film 10 (10a). The patterns 70 cut out are attached to the fabric 60 with the inner side of the film 10 (10a), so that a surface of the fabric 60 has the patterns 70, and the barrier layer 40 is located between the surface layer 20 and the fabric 60.

The invention provides the film attached to a fabric with the barrier layer 40 of a metal medium or made of inorganic matters to block the dye molecules so that the dye molecules of the fabric are incapable of infiltrating into the surface layer 20 of the film, the surface layer 20 is capable of maintaining its own colors and will not be affected by dye colors of the fabric to damage its colors. According to experiments carried out by the inventor, after the film is attached to a fabric, the surface layer of the film is still capable of maintaining its own colors under severe conditions of a high temperature of 90°C for 168 hours. The dye molecules of the fabric are reliably blocked by the barrier layer 40 in the film and incapable of passing through the barrier layer 40.

Although the invention has been disclosed as above with the embodiments, it is not intended to limit the invention. A person having ordinary skill in the art to which the invention pertains can make various changes and modifications without departing from the spirit and scope of the invention. Therefore, scope of protection of the invention shall be subject to what is defined in the pending claims.

## Claims

1. A film (10, 10a) for preventing color migration of fabrics, comprising:
A surface layer (20) having a first surface (22) and a second surface (24) located on opposite sides; **characterized in that**:
the surface layer (20) being a film of polyurethane (PU), thermoplastic polyurethane elastomer (TPU), or thermoplastic polyester elastomer (TPEE); and further comprising:
a barrier layer composition (30) having a barrier layer (40) capable of blocking dyes, the barrier layer composition (30) being combined with the second surface (24) of the surface layer (20).

2. The film as claimed in claim 1, wherein the barrier layer composition (30) has a carrier layer (31), a first protective layer (34) and the barrier layer (40);
the carrier layer (31) is a film and has a release surface (33), a rigidity of the carrier layer (31) is greater than a rigidity of the first protective layer (34), and a stretching rate of the carrier layer is smaller than a stretching rate of the first protective layer (34);
the first protective layer (34) is disposed on the release surface (33) of the carrier layer (31), and is a non-adhesive film or a film with adhesiveness when being heated; and
the barrier layer (40) is disposed on the first protective layer (34); the surface layer (20) is combined with a side of the barrier layer composition (30) where the carrier layer (31) is not disposed.

3. The film as claimed in claim 2, wherein the second surface (24) of the surface layer (20) is combined with the barrier layer (40).

4. The film as claimed in claim 2, wherein the barrier layer composition (30) further comprises a second protective layer (36) disposed on the barrier layer (40); the barrier layer (40) is located between the first protective layer (34) and the second protective layer (36); the second surface (24) of the surface layer (20) is combined with the second protective layer (36).

5. The film as claimed in any one of claims 2 to 4, wherein after the film (10, 10a) is fabricated and before attached to a fabric (60), the carrier layer (31) is peeled off from the film.

6. The film as claimed in any one of claims 1 to 4, wherein the barrier layer (40) is gold, silver, copper or aluminum or their oxides, or zinc sulfide, niobium pentoxide, silicon dioxide or titanium dioxide, and is plated on the first protective layer (34) by sputtering or evaporation.

7. The film as claimed in claim 2, wherein the carrier layer (31) is a polyethylene terephthalate (PET) film or a polyethylene (PE) film; the first protective layer (34) is a film of polyurethane (PU) or thermoplastic polyurethane elastomer (TPU).

8. The film as claimed in claim 4, wherein the second protective layer (36) is a film disposed on the barrier layer (40).

9. The film as claimed in any one of claims 1 to 8, wherein the first surface (22) of the surface layer (20) is a mirror surface, a matte surface or has textures.

10. The film as claimed in any one of claims 1 to 9, wherein the surface layer (20) is added with luminescent materials, light-reflective glass microbeads or pearl powder.

11. The film as claimed in any one of claims 1 to 8, further comprising a light-reflective layer (50), one surface of the light-reflective layer being a light-reflective surface (52); the light-reflective layer (50) being combined with the first surface (22) of the surface layer (20), and the light-reflective surface (52) being exposed.

12. The film as claimed in claim 5, further comprising an adhesive layer (38); after the carrier layer (31) being peeled off, the adhesive layer (38) being combined with the first protective layer (34), and the film (10, 10a) being attached to a fabric by the adhesive layer (38).

13. The film as claimed in any one of claims 2 to 11, wherein the first protective layer (34) is capable of producing an adhesiveness when being heated, and the film (10, 10a) is attached to a fabric with the adhesiveness of the first protective layer (34) when being heated.

14. The film as claimed in any one of claims 1 to 13, wherein the film (10, 10a) is cut into patterns (70) and attached to a fabric.
